# EUROPÄISCHE PATENTSCHRIFT

(11) **EP 1 916 206 B1**
(45) Veröffentlichungstag und Bekanntmachung des Hinweises auf die Patenterteilung: **02.12.2009**
(21) Anmeldenummer: 07020092.8
(22) Anmeldetag: 13.10.2007
(51) Int. Cl.: B65G 47/91

(54) **Flächensauggreifer**
Area suction gripper
Pince aspirante de surface

(30) Priorität: 23.10.2006 DE 102006050970
(43) Veröffentlichungstag der Anmeldung: 30.04.2008
(73) Patentinhaber: J. Schmalz GmbH, 72293 Glatten (DE)
(72) Erfinder: Harter, Leonhard, 72290 Lossburg-Wittendorf (DE); Steyerl, Ken, 72202 Nagold (DE)
(74) Vertreter: Steimle, Josef

(56) Entgegenhaltungen:
- DE-A1- 10 245 716
- DE-U1- 29 512 750
- US-A1- 2003 164 620

## Beschreibung

Die Erfindung betrifft einen Flächensauggreifer mit einer mit Unterdruck beaufschlagbaren Vakuumkammer und mit einem Schaumstoffbelag zur Anlage an handzuhabende Gegenstände entsprechend dem einleitenden Teil des Anspruchs 1, wie er aus der DE-U-295 12 750 bekannt ist.

Derartige Flächensauggreifer dienen insbesondere zum lageweisen Heben von Gegenständen, wie beispielsweise lagestabile Flachmaterialien, wie Bretter oder Platten oder von kleineren Gegenständen, wie Dosen, Bechern, Schalen oder dergleichen.

Es hat sich herausgestellt, dass das Greifen von Gegenstände, die keine dem Schaumstoffbelag zugewandte ebene Fläche aufweisen, problematisch sein kann. Insbesondere Konserven oder Getränkedosen weisen einen nach oben ragenden Rand auf. Aufgrund eines solchen Randes wird die zur Verfügung stehende Saugfläche verringert, wodurch ein Heben der Gegenstände nur mit einer erhöhten Saugkraft realisiert werden kann. Eine erhöhte Saugkraft hat allerdings den Nachteil, dass der Schaumstoffbelag kollabieren kann, wodurch ein Greifen in der Regel nicht mehr möglich ist. Ferner problematisch ist, wenn verschiedene Gegenstände mit verschieden hohen sich in axialer Richtung erstreckenden Rändern oder sonstigen Erhebungen, wie zum Beispiel Schnellverschlusslaschen von Dosen gegriffen werden sollen.

Der vorliegenden Erfindung liegt die Aufgabe zugrunde, einen Flächensauggreifer der eingangs genannten Art dahingehend weiterzubilden, dass auch Gegenstände mit Erhebungen oder Rändern an der Oberseite sicher gegriffen werden können.

Diese Aufgabe wird mit einem Flächensauggreifer mit den Merkmalen des Anspruchs 1 gelöst. Ein derartiger Flächensauggreifer sieht folglich vor, dass der Schaumstoffbelag eine den handzuhabenden Gegenständen zugewandete Decklagenschicht mit Ansauglöchern und eine der Vakuumkammer zugewandte, dicker als die Decklagenschicht ausgebildete Grundschicht mit Durchgangslöchern zur Verbindung der Ansauglöcher mit der Vakuumkammer aufweist, wobei der Querschnitt der Durchgangslöcher größer ist als der Querschnitt der Ansauglöcher.

Hierdurch wird vorteilhafterweise erreicht, dass durch die Grundschicht ein Höhenausgleich der zu greifenden Gegenstände in vertikaler Richtung realisiert werden kann. Aufgrund der kleiner ausgebildeten Ansauglöcher kann dennoch ein sicheres Ansaugen der zu greifenden Gegenstände erfolgen. Ein Kollabieren der dickeren Grundschicht bei erhöhtem Ansaugdruck wird durch den größeren Querschnitt der Durchgangslöchern verhindert. Insofern kann mit dem erfindungsgemäßen Sauggreifer zum einen der Saugdruck erhöht werden, ohne dass ein Kollabieren stattfindet, und zum anderen können Gegenstände mit Oberflächen, die unterschiedliche Höhen aufweisen, sicher gegriffen werden.

Die verschiedenen Schichten des Schaumstoffbelags können dabei aus gleichen oder auch aus unterschiedlichen Materialien sein, wobei insbesondere die Decklagenschicht aus einem geringfügig luftdurchlässigen Schaummaterial sein kann. Bei einem derartigen Material findet ein Ansaugen nicht nur innerhalb der Ansauglöcher, sondern auch vorteilhafterweise im Bereich um die Ansauglöcher statt. Aufgrund der vergleichsweise dünnen Decklagenschicht kann eine Saugwirkung im gesamten an die Durchgangslöcher angrenzenden Bereich der Decklagenschicht erreicht werden.

Bei einer weiteren vorteilhaften Ausgestaltung der Erfindung ist vorgesehen, dass zwischen der Grundschicht und der Vakuumkammer ein mit den Durchgangslöchern in Verbindung stehende Saugöffnungen aufweisendes Saugblech oder Sauggitter vorgesehen ist. Durch die Saugöffnungen können die Durchgangslöcher gezielt mit Unterdruck beaufschlagt werden. Die Saugöffnungen können dabei insbesondere Strömungswiderstände bilden. An den Saugöffnungen können zudem selbstständig ausgebildete Strömungswiderstände oder Strömungsventile, wie beispielsweise Kugelventile, Flugkörperventile, Membranventile oder Elektromagnetventile vorgesehen sein.

Insbesondere ist der Querschnitt der Saugöffnungen kleiner als der Querschnitt der Durchgangslöcher und/oder kleiner als der Querschnitt der Ansauglöcher. Eine derartige Anordnung ergibt ein vorteilhaftes Strömungsverhalten der anzusaugenden Luft in den Durchgangslöchern beziehungsweise in der Vakuumkammer.

Ferner ist vorteilhaft, wenn die Mittellängsachsen der miteinander in Verbindung stehenden Ansauglöcher und Durchgangslöcher entlang einer Linie angeordnet sind. Auch hierdurch wird ein vorteilhaftes Strömungsverhalten insbesondere innerhalb der Durchgangslöcher erreicht. Beim Vorsehen eines Saugblechs oder Sauggitters mit Saugöffnungen ist vorteilhaft die Mittellängsachse der Saugöffnungen ebenfalls entlang der beschriebenen Linie angeordnet.

Eine besonders vorteilhafte Ausgestaltung der Erfindung ergibt sich dann, wenn der Durchmesser der Ansauglöcher im Bereich von ± 50 % und insbesondere im Bereich von ± 20 % der Dicke der Decklagenschicht und/oder wenn der Durchmesser der Durchgangslöchern im Bereich von ± 50 % und insbesondere im Bereich von ± 20 % der Dicke der Grundschicht liegt. Es hat sich gezeigt, dass es vorteilhaft ist, wenn der Durchmesser der Ansauglöcher in etwa der Dicke der Decklagenschicht und der Durchmesser der Durchgangslöcher in etwa der Dicke der Grundschicht entspricht. Hierdurch wird zum einen ein sicheres Ansaugen der Gegenstände durch die Ansauglöcher gewährleistet; zum anderen wird ein Kollabieren der Durchgangslöcher bei erhöhtem Saugdruck verhindert.

Die Dicke der Grundschicht ist dabei vorteilhafterweise um das 2 bis 25fache und vorzugsweise um das 4 bis 15 fache größer als die Dicke der Decklagenschicht. Es hat sich gezeigt, dass gerade bei einem solchen Größenverhältnis ein ausreichendes Höhenausgleichen durch die Grundschicht bei gleichzeitigen guten Saugergebnissen erzielbar ist.

Die Decklagenschicht kann dabei eine Dicke von 1 bis 10 mm und insbesondere eine Dicke von 2 bis 5 mm aufweisen. Je nach Art der zu greifenden Gegenstände kann eine derartige Dicke vorteilhaft sein.

Die Grundschicht weist insbesondere eine Dicke von 5 - 70 mm und vorzugsweise eine Dicke von 10 bis 40 mm auf. Bei derartigen Dicken kann ein ausreichender Höhenausgleich durch die Grundschicht erreicht werden.

Die Decklagenschicht kann insbesondere mit der Grundschicht verklebt sein. Zur Verklebung kann dabei eine Folie Verwendung finden, die zur Stabilisierung des Grenzbereiches zwischen Decklagenschicht und Grundschicht beitragen kann.

Ferner ist denkbar, dass die Decklagenschicht mit der Grundschicht einstückig hergestellt ist. Die Grundschicht kann dabei gleichzeitig mit der Decklagenschicht geschäumt werden und aus dem gleichen Material sein. Ferner ist denkbar, dass die Grundschicht an die Decklagenschicht angeschäumt ist, wobei auch unterschiedliche Materialien Verwendung finden können.

Erfindungsgemäß ist nicht ausgeschlossen, dass zwischen der Decklagenschicht und der Grundschicht weitere, insbesondere auch als Schaumstoffschicht ausgebildete, Schichten vorhanden sind.

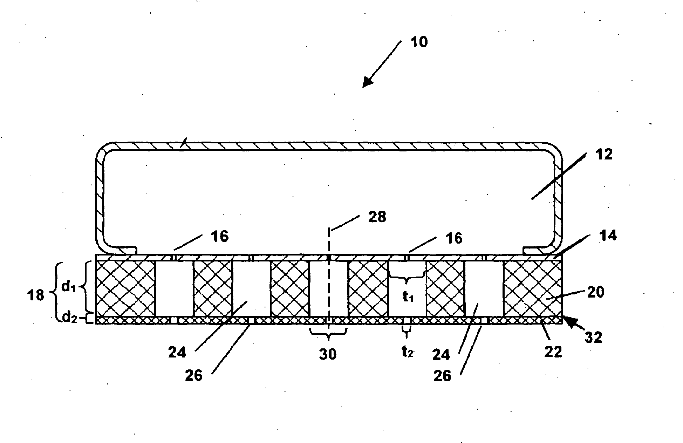

Weitere Einzelheiten und vorteilhafte Ausgestaltungen der Erfindung sind der nachfolgenden Beschreibung zu entnehmen, anhand derer das in der Zeichnung dargestellte Ausführungsbeispiel näher beschrieben und erläutert ist.

In der Zeichnung ist ein vertikaler Querschnitt durch einen erfindungsgemäßen Flächensauggreifer 10 dargestellt. Der Greifer 10 weist eine mit Unterdruck beaufschlagbare Vakuumkammer 12 auf. Die einseitig offene Vakuumkammer 12 ist durch ein Saugblech 14 verschlossen, das Saugöffnungen 16 vorsieht. Auf der der Vakuumkammer 12 abgewandten Seite des Saugblechs 14 ist ein Schaumstoffbelag 18 angebracht, der eine Grundschicht 20 und eine Decklagenschicht 22 vorsieht. Die Grundschicht 20 weist im Bereich der Saugöffnungen 16 insbesondere kreiszylindrisch ausgebildete Durchgangsöffnungen 24 auf. Auf der dem Saugblech 14 abgewandten Seite ist an der Grundschicht 20 die Decklagenschicht 22 angeordnet, wobei die Decklagenschicht mit den Durchgangslöchern 24 in Verbindung stehende Ansauglöcher 26 vorsieht.

Wie aus der Zeichnung deutlich wird, liegen die Mittellängsachsen der miteinander in Verbindung stehenden Saugöffnungen 16, Durchgangslöcher 24 und Ansauglöcher 26 entlang jeweils einer in vertikaler Richtung verlaufenden Linie 28.

Der Durchmesser der ebenfalls insbesondere kreiszylindrisch ausgebildeten Ansauglöcher 26 ist kleiner als der Durchmesser der Durchgangslöcher 24. Ferner kann, wie in der Zeichnung dargestellt ist, der Durchmesser der Ansauglöcher 26 größer sein als der Durchmesser der Saugöffnungen 16. Zudem ist die Dicke d₁ der Grundschicht 20 größer als die Dicke d₂ der Decklagenschicht 22. Die Decklagenschicht 22 ist dabei insbesondere 2 bis 5 mm dick; die Grundschicht insbesondere 10 bis 40 mm.

Aus der Zeichnung wird ferner deutlich, dass der Durchmesser t₂ der Ansauglöcher 26 im Bereich der Dicke d₂ der Decklagenschicht liegt. Die Dicke d₁ der Grundschicht 20 ist um ca. 30 % größer als der Durchmesser t₁ der Durchgangslöcher 24.

Aufgrund der beschriebenen Größenverhältnisse können insbesondere Gegenstände mit ungleichen Oberflächen, wie beispielsweise Dosen mit umlaufenden Rändern, sicher gegriffen werden. Die Decklagenschicht 22 wird dabei an den zu greifenden Gegenstand herangefahren. Aufgrund der Grundschicht 20 kann ein Höhenausgleich der unebenen Oberfläche des zu greifenden Gegenstandes stattfinden. Durch die Ansauglöcher 26 kann ein Ansaugen und damit Greifen der Gegenstände erreicht werden. Aufgrund der vergleichsweise großen Durchmesser der Durchgangslöcher 24 wird auch bei erhöhtem Druck ein Kollabieren der Grundschicht 20 unterbunden. Ein Kollabieren kann in den Ansauglöchern 26 aufgrund der geringen Dicke d₂ der Decklagenschicht 22 nicht stattfinden.

Vorteilhafterweise ist insbesondere das Material der Decklagenschicht 22 geringfügig luftdurchlässig, so dass ein Ansaugen nicht nur unmittelbar im Bereich der Ansauglöcher 26, sondern auch in dem an die Durchgangslöcher 24 angrenzenden Bereich 30 der Decklagenschicht 22 stattfindet.

Bei der in der Zeichnung dargestellten Ausführungsform ist die Decklagenschicht 22 aus einem unterschiedlichen Material wie die Grundschicht 20. Die Decklagenschicht 22 ist mit einer Klebefolie 32 an der Grundschicht 20 befestigt. Die Grundschicht 20 ist ihrerseits auf das Saugblech 14 aufgeklebt.

Der Querschnitt der Durchgangslöcher der äußeren Lage ist größer als der Querschnitt der Ansauglöcher der inneren Lage. Hierdurch wird folgender Vorteil erzielt: Nach dem Aufsetzen der Hebevorrichtung am anzusaugenden Gegenstand wird ein Unterdruck angelegt, so dass der Gegenstand angesaugt wird. Ist der Gegenstand porös, dann muss permanent Luft abgesaugt werden. Dabei beult sich die Decklage im mit dem Bezugszeichen 30 gekennzeichneten Bereich geringfügig ein, so dass nicht nur über die Fläche des kleinen Durchbruchs der Ansauglöcher 26 Luft abgesaugt wird, sondern über eine größere Fläche, da die Decklage im Bereich 30 nicht vollflächig anliegt, sondern geringfügig abgehoben ist. Dadurch wird aber auch die Ansaugkraft entsprechend vergrößert, da sich die Fläche vergrößert hat.

## Patentansprüche

1. Flächensauggreifer (10) mit einer mit Unterdruck beaufschlagbaren Vakuumkammer (12) und mit einem Schaumstoffbelag (18), zur Anlage an handzuhabende Gegenstände, **dadurch gekennzeichnet, dass** der Schaumstoffbelag (18) eine den handzuhabenden Gegenständen zugewandte Decklagenschicht (22) mit Ansauglöchern (26) und eine der Vakuumkammer (12) zugewandte, dicker als die Decklagenschicht (22) ausgebildete Grundschicht (20) mit Durchgangslöchern (24) zur Verbindung der Ansauglöcher (26) mit der Vakuumkammer (12) aufweist, wobei der Querschnitt (t₁) oder Durchgangslöcher (24) größer ist als der Querschnitt (t₂) der Ansauglöcher (26).

2. Flächensauggreifer (10) nach Anspruch 1, **dadurch gekennzeichnet, dass** zumindest die Decklagenschicht (22) wenigstens bedingt luftdurchlässig ist.

3. Flächensaggreifer (10) nach einem der vorhergehenden Ansprüche, **dadurch gekennzeichnet, dass** die Mittellängsachsen der miteinander in Verbindung stehenden Ansauglöcher (26) und Durchgangslöcher (24) entlang einer Linie (28) angeordnet sind.

4. Flächensaggreifer (10) nach wenigstens einem der vorhergehenden Ansprüche, **dadurch gekennzeichnet, dass** der Durchmesser (t₂) der Ansauglöcher (26) im Bereich von ± 50 % der Dicke (d₂) der Decklagenschicht (22) und/oder dass der Durchmesser (t₁) der Durchgangslöcher (24) im Bereich von ± 50% der Dicke der Grundschicht (20) liegt.

5. Flächensauggreifer (10) nach wenigstens einem der vorhergehenden Ansprüche, **dadurch gekennzeichnet, dass** die Dicke (d₁) der Grundschicht (20) um das 2 bis 25fache und insbesondere um das 4 bis 15 fache größer ist als die Dicke (d₂) der Decklagenschicht (22).

6. Flächensauggreifer(10) nach wenigstens einem der vorhergehenden Ansprüche, **dadurch gekennzeichnet, dass** die Decklagenschicht (22) eine Dicke (d₂) von 1 bis 10 mm und insbesondere eine Dicke (d₂) von 2 bis 5 mm aufweist.

7. Flächensauggreifer(10) nach wenigstens einem der vorhergehenden Ansprüche, **dadurch gekennzeichnet, dass** die Decklagenschicht (22) mit der Grundschicht (20) verklebt list.

8. Flächensauggreifer(10) nach wenigstens einem der vorhergehenden Ansprüche, **dadurch gekennzeichnet, dass** die Decklagenschicht (22) mit der Grundschicht (20) einstückig hergestellt ist.

## Claims

1. A planar suction gripper (10), having a vacuum chamber (12) which can be charged with underpressure and having a foam material coating (18), for placement against objects to be manipulated, **characterized in that** the foam material coating (18) has a cover layer (22) with suction holes (26), which faces the objects to be manipulated, and a base layer (20), which faces the vacuum chamber (12), is embodied to be thicker than the cover layer (22), and has passage holes (24) for connection of the suction holes (26) with the vacuum chamber (12), wherein the cross section (tᵢ) of the passage holes (24) is greater than the cross section (t₂) of the suction holes (26).

2. The planar suction gripper (10) in accordance with claim 1, **characterized in that** at least the cover layer (22) is at least partially air-permeable.

3. The planar suction gripper (10) in accordance with one of the preceding claims, **characterized in that** the center longitudinal axes of the suction holes (26) and of the passage holes (24) which are connected with each other are arranged along a line (28).

4. The planar suction gripper (10) in accordance with at least one of the preceding claims, **characterized in that** the diameter (t₂) of the suction holes (26) is located within the range of ± 50% of the thickness (d₂) of the cover layer (22), and/or that the diameter (tᵢ) of the passage holes (24) is located within the range of ± 50% of the thickness of the base layer (20).

5. The planar suction gripper (10) in accordance with at least one of the preceding claims, **characterized in that** the thickness (d₁) of the base layer (20) is greater by 2- to 25- times, and in particular by 4- to 15-times, than the thickness (d₂) of the cover layer (22).

6. The planar suction gripper (10) in accordance with at least one of the preceding claims, **characterized in that** the cover layer (22) has a thickness (d₂) of between 1 and 10 mm, and in particular a thickness (d₂) of 2 to 5 mm.

7. The planar suction gripper (10) in accordance with at least one of the preceding claims, **characterized in that** the cover layer (22) is glued together with the base layer (20) .

8. The planar suction gripper (10) in accordance with at least one of the preceding claims, **characterized in that** the cover layer (22) is produced in one piece with the base layer (20).

## Revendications

1. Pince aspirante plate (10), comportant une chambre à vide (12), propre à être sollicitée par une dépression, et comportant un revêtement en mousse (18) destiné à venir en appui contre les objets à manipuler, **caractérisée en ce que** le revêtement en mousse (18) comporte une couche de recouvrement (22), orientée vers les objets à manipuler et munie de trous d'aspiration (26), et une couche de base (20), orientée vers la chambre à vide (12), plus épaisse que la couche de recouvrement (22) et munie de trous débouchants (24) destinés à faire communiquer les trous d'aspiration (26) avec la chambre à vide (12), la section (t₁) des trous débouchants (24) étant supérieure à la section (t₂) des trous d'aspiration (26).

2. Pince aspirante plate (10) selon la revendication 1, **caractérisée en ce qu'**au moins la couche de recouvrement (22) est au moins relativement perméable à l'air.

3. Pince aspirante plate (10) selon l'une quelconque des revendications précédentes, **caractérisée en ce que** les axes médians longitudinaux des trous d'aspiration (26) et trous débouchants (24), reliés entre eux, sont disposés le long d'une ligne (28).

4. Pince aspirante plate (10) selon au moins l'une quelconque des revendications précédentes, **caractérisée en ce que** le diamètre (t₂) des trous d'aspiration (26) se situe dans un intervalle de ± 50 % de l'épaisseur (d₂) de la couche de recouvrement (22) et/ou **en ce que** le diamètre (t₁) des trous débouchants (24) se situe dans un intervalle de ± 50 % de l'épaisseur de la couche de base (20).

5. Pince aspirante plate (10) selon au moins l'une quelconque des revendications précédentes, **caractérisée en ce que** l'épaisseur (d₁) de la couche de bas,e (20) est de 2 à 25 fois, et en particulier de 4 à 15 fois supérieure à l'épaisseur (d₂) de la couche de recouvrement (22).

6. Pince aspirante plate (10) selon au moins l'une quelconque des revendications précédentes, **caractérisée en ce que** la couche de recouvrement (22) a une épaisseur (d₂) de 1 à 10 mm, et en particulier une épaisseur (d₂) de 2 à 5 mm.

7. Pince aspirante plate (10) selon au moins l'une quelconque des revendications précédentes, **caractérisée en ce que** la couche de recouvrement (22) est collée à la couche de base (20).

8. Pince aspirante plate (10) selon au moins l'une quelconque des revendications précédentes, **caractérisée en ce que** la couche de recouvrement (22) est réalisée d'une seule pièce avec la couche de base (20).
